# EUROPEAN PATENT SPECIFICATION

(11) **EP 2 608 304 B1**
(45) Date of publication and mention of the grant of the patent: **24.08.2016**
(21) Application number: 12197980.1
(22) Date of filing: 19.12.2012
(51) Int. Cl.: H01M 8/04014, H01M 8/2475, H01M 8/0612

(54) **Fuel cell apparatus**
Brennstoffzellenvorrichtung
Appareil de pile à combustible

(30) Priority: 20.12.2011 JP 2011278601
(43) Date of publication of application: 26.06.2013
(73) Proprietor: AISIN SEIKI KABUSHIKI KAISHA, Kariya-shi, Aichi 448-8650 (JP); KYOCERA CORPORATION, Kyoto-shi, Kyoto 612-8501 (JP)
(72) Inventor: Endo, Satoshi, Kariya-shi, Aichi 448-8650 (JP); Nakamura, Mitsuhiro, Kyoto-shi, Kyoto 612-8501 (JP); Ono, Takashi, Kyoto-shi, Kyoto 612-8501 (JP)
(74) Representative: TBK

(56) References cited:
- JP-A- 2010 044 990
- US-A1- 2005 142 422
- US-A1- 2007 104 992
- US-A1- 2009 176 136
- US-A1- 2009 263 689
- US-B1- 6 492 050

## Description

This disclosure generally relates to a fuel cell apparatus according to the preamble of claim 1.

### BACKGROUND DISCUSSION

A known fuel cell apparatus is disclosed in JP 2008-066127 A. According to the known fuel cell apparatus disclosed in JP 2008-066127 A, a housing includes a power generation chamber accommodating therein a reformer and a stack. At the housing, a cathode gas flow passage is formed at an outer surface side of the housing and an exhaust gas flow passage is formed at an inner side relative to the cathode gas passage so that an exhaust gas, which includes, for example, anode off-gas and cathode off-gas that were not used for power generation, flows through the exhaust gas flow passage. Thus, a cathode gas of the cathode flow passage is pre-heated by the exhaust gas flowing through the exhaust gas flow passage and is then supplied to the stack. Further, because the cathode gas, which is air that is relatively low in temperature, flows at the outer surface side of the housing, heat release from the housing is restricted and efficiency is enhanced.

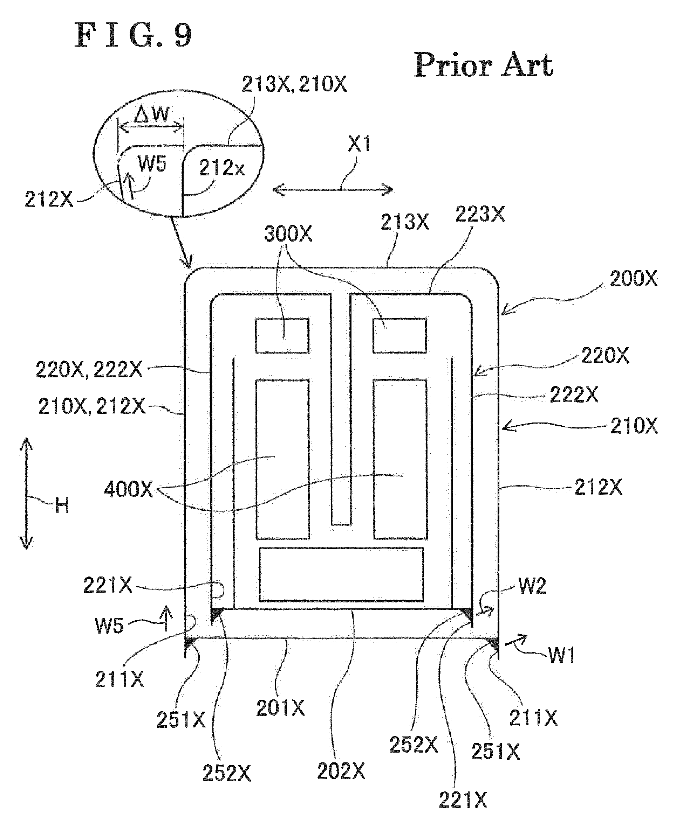

Among known fuel cell apparatuses of the above-described type, a known fuel cell apparatus including a configuration illustrated in Fig. 9 is developed. According to the known fuel cell apparatus, a housing 200X is formed by assembling a first inverted-U-shaped member 210X and a second inverted-U-shaped member 220X to each other so that the first inverted-U-shaped member 210X and the second inverted-U-shaped member 220X are layered with each other. The first inverted-U-shaped member 210X is formed in an inverted-U shape and includes a first lower surface opening portion 211X opening downwardly, two first side walls 212X facing each other, a first ceiling wall 213X connecting upper end portions of the respective first side walls 212X to each other. The second inverted-U-shaped member 220X is formed in an inverted-U shape and includes a second lower surface opening portion 221X opening downwardly, two second side walls 222X facing each other, a second ceiling wall 223X connecting upper end portions of the respective second side walls 222X to each other. In this case, a closing cover 201X is integrally attached to a lower end portion of each of the first side walls 212X of the first inverted-U-shaped member 210X at a welded portion 251X. A closing cover 202X is integrally attached to a lower end portion of each of the second side walls 222X at a welded portion 252X.

However, the above-described first inverted-U-shaped member 210X is formed in the inverted-U-shape and includes the first ceiling wall 213X connecting the upper end portions of the respective first side walls 212X to each other. In a similar manner thereto, the above-described second inverted-U-shaped member 220X is formed in the inverted-U-shape and includes the second ceiling wall 223X connecting the upper end portions of the respective second side walls 222X to each other. Thus, during assembling of assembly parts, including a stack 400X, a reformer 300X and the like, to an inside of the first inverted-U-shaped member 210X and the second inverted-U-shaped member 220X, the assembly parts, including the stack 400X, the reformer 300X and the like, interfere with the first ceiling wall 213X of the first inverted-U-shaped member 210X and with the second ceiling wall 223X of the second inverted-U-shaped member 220X. Accordingly, it is difficult to assemble the assembly parts, including the stack 400X, the reformer 300X and the like, and therefore it takes time to assemble the assembly parts.

Further, at a power generation chamber of the housing 200X, temperature is generally likely to be higher at an upper portion of the power generation chamber than temperature at a lower portion thereof. Specifically, in a case where the reformer 300X is arranged above the stack 400X arranged in the power generation chamber of the housing 200X, the temperature is generally likely to be higher at the upper portion of the power generation chamber of the housing 200X than the temperature at the lower portion thereof. Thus, in a cross section in a height direction (a direction of an arrow H) of the known fuel cell apparatus, the first ceiling wall 213X of the first inverted-U-shaped member 210X and the second ceiling wall 223X of the second inverted-U-shaped member 220X, both of which constitute the housing 200X, are likely to thermally expand and to undergo extensional deformation or elongation deformation in a direction of an arrow X1 when viewed in a cross-sectional view along the height direction (the direction of the arrow H). In this case, an elongation deformation volume of the first ceiling wall 213X in the direction of the arrow X1 may affect the welded portions 251X of the closing cover 201X in a direction of an arrow W1 via the first side walls 212X. In a similar manner thereto, an elongation deformation volume of the second ceiling wall 223X may affect the welded portions 252X of the closing cover 202X in a direction of an arrow W2 via the second side walls 222X. According to the known fuel cell apparatus including the above-described configuration, the first ceiling wall 213X and the second ceiling wall 223X repeat the thermal expansion and a thermal contraction as a power generating operation is performed and stopped, respectively.

Further, as illustrated in Fig. 9, in a case where the first ceiling wall 213X of the first inverted-U-shaped member 210X thermally expands for a length ΔW, an effect of the length ΔW may cause a phenomenon where the first side wall 212X connected to the first ceiling wall 213X may be lifted upwardly (in a direction of an arrow W5). In this case, as the first side wall 212X is lifted upwardly (in the direction of the arrow W5), a tensile force possibly causing deterioration may be applied to the welded portion 251X of the first side wall 212X. In a similar manner thereto, as the second ceiling wall 223X of the second inverted-U-shaped member 220X thermally expands, the tensile force may be applied to the welded portion 252X of the second side wall 222X connected to the second ceiling wall 223X.

Accordingly, after the known fuel cell apparatus is used for a long period of time, stress loading repetitively works at the welded portions 251X and 252X due to the thermal expansion and the thermal contraction, which may promote the deterioration of the welded portions 251X and 252X. Consequently, the housing 200X of the known fuel cell apparatus has limitations of enhancement in durability and longevity thereof. The same applies to a case where mechanical fixture including, for example, a bolt and nut, is used instead of welding the welded portions 251X and 252X.

US 2009/176136 A1 shows a generic fuel cell apparatus according to the preamble of claim 1. This fuel cell apparatus comprises a housing including a power generation chamber and a closing member closing an upper portion of the power generation chamber; a stack provided in the power generation chamber and supplied with an anode gas and a cathode gas to generate electric power; a cathode gas flow passage provided at the housing and allowing the cathode gas to be supplied to the stack; an exhaust gas flow passage provided at the housing and allowing an exhaust gas generated at the power generation chamber to be exhausted to an outside of the power generation chamber; the housing including a first U-shaped plate member which is formed in a U-shape and includes a first upper surface opening portion opening upwardly in a height direction of the housing, two first side walls facing each other, a first bottom wall connecting a lower portion of each of the two first side walls to each other; the housing including a second U-shaped plate member which is formed in a U-shape and includes a second upper surface opening portion opening upwardly in the height direction, two second side walls facing each other, a second bottom wall connecting a lower portion of each of the two second side walls to each other; the housing being formed by layering the first U-shaped plate member and the second U-shaped plate member with each other while a clearance being provided between the first U-shaped plate member and the second U-shaped plate member in a thickness direction thereof in a manner that the first upper surface opening portion and the second upper surface opening portion are positioned at an upper side in the height direction; and at least part of at least one of the cathode gas flow passage and the exhaust gas flow passage including a side clearance flow passage formed by one of the two first side walls and one of the two second side walls which faces the one of the two first side walls in a thickness direction thereof, and a bottom clearance flow passage formed by the first bottom wall and the second bottom wall which face each other, the bottom clearance flow passage being in fluid communication with the side clearance flow passage.

Further fuel cell apparatuses according to the prior art are shown in US 2009/263689 A1, US 2005/142422 A1, US 2007/104992 A1, US 6 492 050 B1 and JP 2010 044990 A.

### SUMMARY OF THE INVENTION

It is the object of the present invention to further develop a generic fuel cell apparatus according to the preamble of claim 1 such that stress loading at welded portions of the fuel cell apparatus structure is reduced.

The object of the present invention is achieved by a fuel cell apparatus having the features of claim 1.

Further advantageous developments of the present invention are defined in the dependent claims.

It is an advantage of the present invention to provide a fuel cell apparatus which enhances an assembling performance of, for example, a reformer and a stack, which restricts deterioration of a welded portion and/or fixture, and which is advantageous in enhancing durability and longevity of a housing.

According to another advantage of the present invention, the first U-shaped plate member is formed in the U-shape and includes the first upper surface opening portion opening upwardly. The second U-shaped plate member is formed in the U-shape and includes the second upper surface opening portion opening upwardly. Thus, in a case where assembly parts including, for example, the stack, are assembled to an inside of the first U-shaped plate member and the second U-shaped plate member, it is prevented that the assembly parts including, for example, the stack, interfere with a ceiling wall of the first U-shaped plate member and a ceiling wall of the second U-shaped plate member. Accordingly, an assembly performance of the assembly parts including, for example, the stack, is enhanced.

Preferably, the first U-shaped plate member, the second U-shaped plate member and a thermal insulating layer are arranged in this order from the outside towards the power generation chamber in the thickness direction, at least part of one of the cathode gas flow passage and the exhaust gas flow passage is formed by the thermal insulating layer and the second U-shaped plate member, and at least part of the other one of the cathode gas flow passage and the exhaust gas flow passage is formed by the first U-shaped plate member and the second U-shaped plate member.

Consequently, the cathode gas flow passage and the exhaust gas flow passage are formed at the housing in the above-described manner.

Preferably, the housing includes a third U-shaped plate member formed in a U-shape and including a third upper surface opening portion opening upwardly, two third side walls facing each other, a third bottom wall connecting a lower portion of each of the two third side walls to each other, the first U-shaped plate member, the second U-shaped plate member and the third U-shaped plate member are arranged from the outside towards the power generation chamber in the thickness direction, the housing is formed by layering the first U-shaped plate member, the second U-shaped plate member and the third U-shaped plate member with one another in the thickness direction thereof in a manner that the first upper surface opening portion, the second upper surface opening portion and the third upper surface opening portion are positioned at the upper side in the height direction of the housing, at least part of one of the cathode gas flow passage and the exhaust gas flow passage includes a first side clearance flow passage formed by one of the two first side walls and one of the two second side walls which faces the one of the two first side walls, and a first bottom clearance flow passage formed by the first bottom wall and the second bottom wall which face each other, the first bottom clearance flow passage is in fluid communication with the first side clearance flow passage, and at least part of the other one of the cathode gas flow passage and the exhaust gas flow passage includes a second side clearance flow passage formed by one of the two second side walls and one of the two third side walls which faces the one of the two second side walls, and a second bottom clearance flow passage formed by the second bottom wall and the third bottom wall which face each other, the second bottom clearance flow passage is in fluid communication with the second side clearance flow passage.

Consequently, the cathode gas flow passage and the exhaust gas flow passage are formed at the housing in the above-described manner.

Preferably, the fuel cell apparatus further includes a combusting portion provided above the stack and combusting a combustible gas, and the combustible gas includes an anode off-gas and/or a fuel gas which are discharged from an upper surface of the stack.

According to the above-described configuration, at the power generation chamber, the combusting portion is arranged above the stack, and therefore temperature is likely to be higher at an upper portion of the power generation chamber relative to at a lower portion thereof due to combustion of the combustible gas including the anode off-gas and/or the fuel gas which are discharged from the upper surface of the stack. Thus, in a case where the closing member, which is attached to an upper side of the housing in the height direction of the fuel cell apparatus, is thermally expanded and is deformed to elongate, volume of elongation deformation is transmitted via the first side wall to a first intersection portion at which the first bottom wall and the first side wall intersect with each other, and the thermal deformation is absorbed by a deformation of the first intersection portion as the first intersection portion is deformed to follow the deformation of the closing member. In a similar manner thereto, the volume of elongation deformation is transmitted via the second side wall to a second intersection portion at which the second bottom wall and the second side wall intersect with each other, and the thermal deformation is absorbed by a deformation of the second intersection portion as the second intersection portion is deformed to follow the deformation of the closing member. Accordingly, a possibility is reduced that the thermal expansion may affect a welded portion or fixture which is for attaching the closing member. Consequently, deterioration of the welded portion or the fixture is restricted, and thus durability and longevity of the housing may be enhanced.

Preferably, the first U-shaped plate member, the second U-shaped plate member and the third U-shaped plate member are arranged in this order from the outside towards the power generation chamber in the thickness direction, at least part of one of the cathode gas flow passage and the exhaust gas flow passage is formed by the first U-shaped plate member and the second U-shaped plate member, and at least part of the other one of the cathode gas flow passage and the exhaust gas flow passage is formed by the second U-shaped plate member and the third U-shaped plate member.

Consequently, the cathode gas flow passage and the exhaust gas flow passage are formed at the housing in the above-described manner.

Preferably, at least one of the first U-shaped plate member and the second U-shaped plate member includes a plurality of protrusions that form the side clearance flow passage and the bottom clearance flow passage by protruding toward the other one of the first U-shaped plate member and the second U-shaped plate member.

According to the above-described configuration, the clearance flow passages, each serving as a gas flow passage, are easily formed between the first U-shaped plate member and the second U-shaped plate member because the protrusions are provided.

According to the present invention, a stress loading is unlikely to be applied to the welded portion and/or the fixture which are for attaching the closing member closing, for example, the first upper surface opening portion of the first U-shaped plate member to the housing. Accordingly, the deterioration of the welded portion and/or the fixture is restricted, and thus the durability of the welded portion and/or the fixture is enhanced and the longevity thereof is increased in an advantageous manner. Thus, the durability of the housing is enhanced and the longevity thereof is increased.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a cross-sectional view, which is cut in a height direction, of a fuel cell apparatus according to a first comparative example disclosed here;
Fig. 2 is a cross-sectional view, which is cut in the height direction, of a housing according to the first comparative example;
Fig. 3 is a perspective view illustrating a first U-shaped plate member, a second U-shaped plate member and a third U-shaped plate member according to the first comparative example;
Fig. 4 is a perspective view illustrating an assembly process of the fuel cell apparatus according to a second comparative example disclosed here;
Fig. 5 is a perspective view illustrating the assembly process of the fuel cell apparatus according to the second comparative example;
Fig. 6 is a cross-sectional view, which is cut in the height direction, of a housing according to a third comparative example disclosed here;
Fig. 7 is a cross-sectional view, which is cut in the height direction, of a fuel cell apparatus according to the third comparative example;
Fig. 8A is a cross-sectional view, which is cut in the height direction, of a housing according to an embodiment of the present invention disclosed here;
Fig. 8B is a cross-sectional view, which is cut in the height direction, of the housing according to the embodiment; and
Fig. 9 is a cross-sectional view, which is cut in the height direction, of a known fuel cell apparatus.

### DETAILED DESCRIPTION

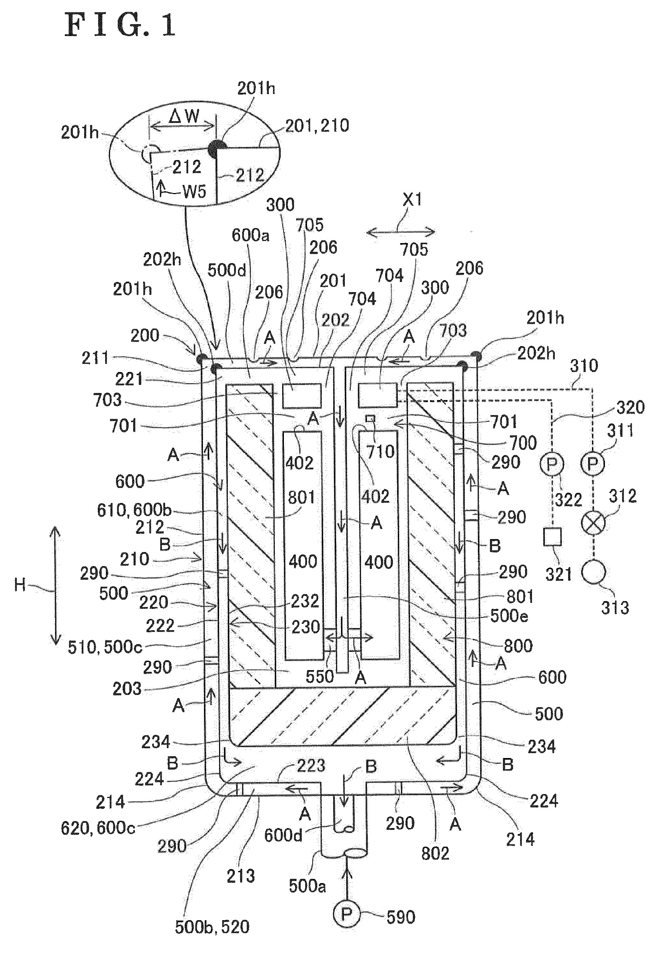

Figs. 1 to 3 illustrate a first comparative example disclosed here. Fig. 1 is a cross-sectional view of a housing 200 of a fuel cell apparatus, which is cut in a height direction thereof (a direction of an arrow H) and illustrates a transverse cross section of the housing 200. As illustrated in Fig. 1, the fuel cell apparatus includes a power generation chamber 203, the housing 200 made of metal and including a first closing member 201 (a closing member) and a second closing member 202 (the closing member) each closing an upper portion of the power generation chamber 203, a reformer 300 arranged at the power generation chamber 203 for reforming a fuel gas (that is, a source gas) by using water vapor so as to generate an anode gas that includes hydrogen as a main constituent, a stack 400 which is arranged at the power generation chamber 203, is supplied with the anode gas and a cathode gas to generate electric power, a cathode gas flow passage 500 arranged at the housing 200, through which the cathode gas is supplied to a cathode of the stack 400, and an exhaust gas flow passage 600 arranged at the housing 200, through which an exhaust gas generated in the power generation chamber 203 is exhausted to an outside of the power generation chamber 203. In this comparative example, each of the reformer 300 and the stack 400 is provided at, for example, two positions.

The stack 400 (that is, a fuel cell stack) refers to a solid oxide fuel cell (SOFC) and includes an anode (ceramic anode), a ceramic electrolyte membrane and the cathode (ceramic cathode). A fuel gas flow passage 310 through which the fuel gas is supplied to the reformer 300 is provided at the fuel cell apparatus. The fuel gas flow passage 310 is connected via a pump 311 and a valve 312 to a gas source 313. A water supplying flow passage 320 is provided at the fuel cell apparatus, and liquid-phase reforming water is supplied via the water supplying flow passage 320 to the reformer 300 so that the water vapor for reformation is generated. A tank 321 for storing the reforming water, and a pump 322 for supplying the reforming water stored in the tank 321 to an evaporating portion of the reformer 300 are provided at the water supplying flow passage 320.

As illustrated in Fig. 1, each of the reformers 300 integrally includes the evaporating portion and is arranged above the corresponding stack 400 so as to be positioned at the upper portion of the power generation chamber 203. At the power generation chamber 203, a combusting portion 700 is provided between each of the stacks 400 and the corresponding reformer 300. The combusting portions 700 heat the reformers 300 by combusting a combustible gas constituted by an anode off-gas and/or the fuel gas which are discharged from an upper surface 402 of each of the stack 400 so that the reformers 300 become appropriate for a reforming reaction (usually, an endoergic reaction).

The anode off-gas is a gas discharged from the anode of each of the stacks 400 and is combustible because the anode off-gas includes unreacted hydrogen that is not used in a power generation reaction. As illustrated in Fig. 1, each of the combusting portions 700 includes a bottom heating space 701 heating a bottom wall of the reformer 300, a first side heating space 703 heating a first side wall of the reformer 300, a second side heating space 704 heating a second side wall of the reformer 300 and an upper heating space 705 heating an upper wall of the reformer 300. Each of the combusting portions 700 includes an ignition portion 710 for igniting the combustible gas at a time of startup. The anode gas, which is generated at the reformers 300 and includes hydrogen as the main constituent thereof, is supplied via a flow passage to a lower portion of the anode of each of the stacks 400, and is supplied to the power generation reaction.

As illustrated in Fig. 1, a thermal insulating layer 800 including high thermal insulation properties and defining the power generation chamber 203 is provided at the power generation chamber 203. The thermal insulating layer 800 includes a side thermal insulating layer 801 arranged at an outer side of each of the stacks 400 and a bottom thermal insulating layer 802 arranged at a bottom side of the stacks 400. In this comparative example, the side thermal insulating layer 801 is provided at, for example, two positions.

As illustrated in Fig. 1, the cathode gas flow passage 500 is for transferring air, which is transferred by an air supply source 590 (a pump) arranged at the outside and which is relatively low in temperature, to the cathode of each of the stacks 400 as the cathode gas. The cathode gas flow passage 500 includes a first cathode gas flow passage 500a formed in a tubular shape, a second cathode gas flow passage 500b arranged along a bottom of the power generation chamber 203, a third cathode gas flow passage 500c arranged along the height direction (the direction of an arrow H), a fourth cathode gas flow passage 500d arranged along the second closing member 202 and the first closing member 201, and a fifth cathode gas flow passage 500e extending in the height direction so as to be in communication with a lower portion of the cathode of each of the stacks 400 via respective communication flow passages 550. The air of the outside, as the cathode gas, flows through the first cathode gas flow passage 500a, the second cathode gas flow passage 500b, the third cathode gas flow passage 500c, the fourth cathode gas flow passage 500d, the fifth cathode gas flow passage 500e and the communication flow passages 550 in this order (in a direction of an arrow A), and then is supplied to the lower portion of the cathode of each of the stacks 400 so as to be supplied for the power generation reaction.

The exhaust gas flow passage 600 is for discharging the exhaust gas, which is generated at the power generation chamber 203 and is relatively high in temperature, to the outside. The exhaust gas flow passage 600 includes a first exhaust gas flow passage 600a being in communication with the upper heating spaces 705 in the power generation chamber 203 of the housing 200, a second exhaust gas flow passage 600b through which the exhaust gas flows in a downward direction, a third exhaust gas flow passage 600c through which the exhaust gas flows along the bottom of the housing 200, and a fourth exhaust gas flow passage 600d formed in a tubular shape. The exhaust gas which is generated at the power generation chamber 203 and is relatively high in temperature flows through the exhaust gas flow passage 600 in this order (in a direction of an arrow B), and is then discharged to the outside. The exhaust gas includes, for example, the anode off-gas discharged from the anode of each of the stacks 400, the cathode off-gas discharged from the cathode of each of the stacks 400, and an exhaust combustion gas generated after the anode off-gas is burnt at the combusting portions 700.

As illustrated in Fig. 1, the cathode gas flow passage 500 and the exhaust gas flow passage 600 are arranged to adjacent to each other, and exchange the heat with each other. The cathode gas, which flows through the cathode gas flow passage 500 and is relatively low in temperature, and the exhaust gas, which flows through the exhaust gas flow passage 600 and is relatively high in temperature, flow in opposite directions to each other when viewed in the cross section (Fig. 1). The cathode gas, which flows through the cathode gas flow passage 500 and is relatively low in temperature, is preheated by the heat exchange. The exhaust gas, which flows through the exhaust gas flow passage 600 and is relatively high in temperature, is cooled down by the heat exchange. In the first comparative example, the reformers are arranged at an inside of the housing, however, the reformer may be arranged outside the housing. Further, hydrogen may be supplied directly to the stack 400 instead of the anode gas supplied to the stack 400 via the reformers.

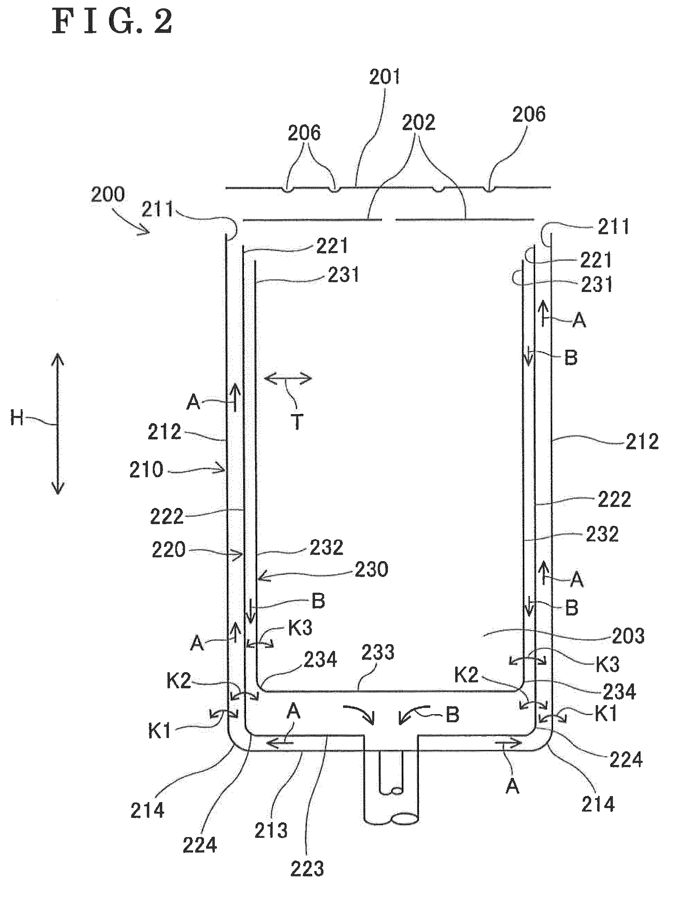

Fig. 2 is a cross-sectional view of the housing 200, which is cut in the height direction thereof (the direction of the arrow H) and illustrates a transverse cross section of the housing 200 in a state where assembly parts including the reformer 300 and the like are not assembled. As illustrated in Fig. 2, a main framework of the housing 200 is constituted by a first U-shaped plate member 210, a second U-shaped plate member 220 and a third U-shaped plate member 230 assembled to one another. As illustrated in Fig. 2, the first U-shaped plate member 210 is made of metal including, for example, carbon steel or alloy steel, and is formed in a U-shape. The first U-shaped plate member 210 includes a first upper surface opening portion 211, two first side walls 212 facing each other, a first bottom wall 213 connecting lower portions of the respective first side walls 212 to each other and a first intersection portion 214. In this comparative example, the first intersection portion 214 is provided at, for example, two positions. Each of the first intersection portions 214 is a portion at which the first bottom wall 213 and the first side wall 212 intersect with each other. Each of the first intersection portions 214 is flexible, and therefore allows the first side wall 212 to be easily displaced relative to the first bottom wall 213 in a direction of an arrow K1.

As illustrated in Fig. 2, the second U-shaped plate member 220 is made of metal and is formed in a U-shape. The second U-shaped plate member 220 includes a second upper surface opening portion 221, two second side walls 222 facing each other, a second bottom wall 223 connecting lower portions of respective second side walls 222 to each other and a second intersection portion 224. In this comparative example, the second intersection portion 224 is provided at, for example, two positions. Each of the second intersection portions 224 is flexible, and therefore allows the second side wall 222 to be easily displaced relative to the second bottom wall 223 in a direction of an arrow K2. Each of the second intersection portions 224 is a portion at which the second bottom wall 223 and the second side wall 222 intersect with each other.

As illustrated in Fig. 2, the third U-shaped plate member 230 is made of metal and is formed in a U-shape. The third U-shaped plate member 230 includes a third upper surface opening portion 231, two third side walls 232 facing each other, a third bottom wall 233 connecting lower portions of the respective third side walls 232 to each other and a third intersection portion 234. In this comparative example, the third intersection portion 234 is provided at, for example, two positions. Each of the third intersection portions 234 is a portion at which the third bottom wall 233 and the third side wall 232 intersect with each other. Each of the third intersection portions 234 is flexible, and therefore allows the third side wall 232 to be easily displaced relative to the third bottom wall 233 in a direction of an arrow K3.

As illustrated in Fig. 1 and 2, the first U-shaped plate member 210, the second U-shaped plate member 220 and the third U-shaped plate member 230 are layered relative to one another while a clearance being provided therebetween in a thickness direction of the first U-shaped plate member 210, the second U-shaped plate member 220 and the third U-shaped plate member 230 (a direction of an arrow T illustrated in Fig. 2) in a manner that the first upper surface opening portion 211, the second upper surface opening portion 221 and the third upper surface opening portion 231 are positioned at an upper side in the height direction. Each of the first upper surface opening portion 211, the second upper surface opening portion 221 and the third upper surface opening portion 231 opens upwardly in the height direction. Thus, the housing 200 is formed by assembling the first U-shaped plate member 210, the second U-shaped plate member 220 and the third U-shaped plate member 230 to one another in the above-described manner.

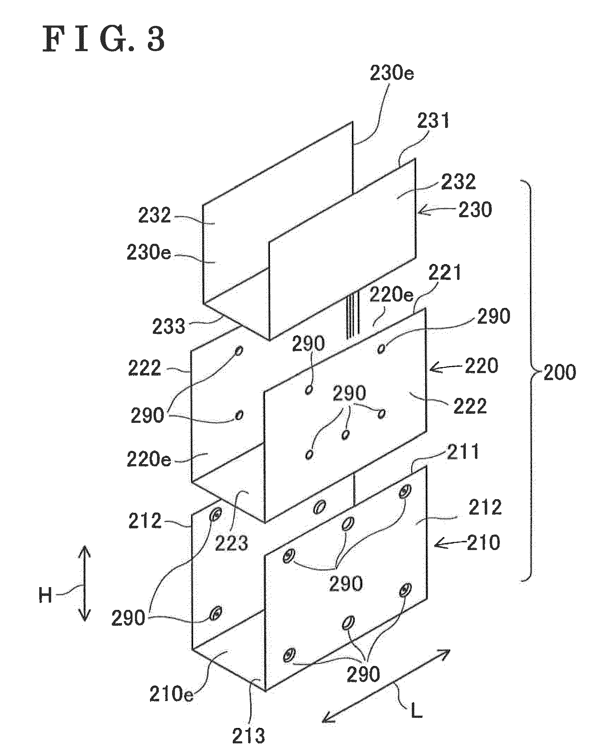

Fig. 3 illustrates a state where the first U-shaped plate member 210, the second U-shaped plate member 220, and the third U-shaped plate member 230, each of which is for constituting the main framework of the housing 200, are arranged along a lengthwise direction of the first U-shaped plate member 210, the second U-shaped plate member 220, and the third U-shaped plate member 230 (a direction of an arrow L). As illustrated in Fig. 3, a first end opening 210e is provided at each end of the first U-shaped plate member 210 in the lengthwise direction thereof (the direction of the arrow L). A second end opening 220e is provided at each end of the second U-shaped plate member 220 in the lengthwise direction thereof (the direction of the arrow L). A third end opening 230e is provided at each end of the third U-shaped plate member 230 in the lengthwise direction thereof (the direction of the arrow L).

As illustrated in Fig. 1, the first closing member 201 is joined to an upper end portion of the first U-shaped plate member 210 at a first welded portion 201 h. In this comparative example, the first welded portion 201h is provided at, for example, two positions. Thus, the first upper surface opening portion 211 of the first U-shaped plate member 210 is closed with the first closing member 201. The second closing member 202 is joined to an upper end portion of the second U-shaped plate member 220 at a second welded portion 202h. In this comparative example, the second welded portion 202h is provided at, for example, two positions. Thus, the second upper surface opening portion 221 of the second U-shaped plate member 220 is closed with the second closing member 202. As illustrated in Fig. 1, the first closing member 201 and the second closing member 202 define the fourth cathode gas flow passage 500d.

As illustrated in Figs. 1 and 2, each of the second exhaust gas flow passage 600b and the third exhaust gas flow passage 600c of the exhaust gas flow passage 600 is defined by an outer surface of the third U-shaped plate member 230 and an inner surface of the second U-shaped plate member 220. Here, the exhaust gas flow passage 600 includes a first side clearance flow passage 610 (a side clearance flow passage) and a first bottom clearance flow passage 620 (a bottom clearance flow passage) that is in communication with the first side clearance flow passage 610. The first side clearance flow passage 610 corresponds to the second exhaust gas flow passage 600b, and is formed or defined by arranging one of the second side walls 222 of the second U-shaped plate member 220 and one of the third side walls 232 of the third U-shaped plate member 230 so that the second side wall 222 and the third side wall 232 face each other. The first bottom clearance flow passage 620 corresponds to the third exhaust gas flow passage 600c, and is defined by arranging the second bottom wall 223 of the second U-shaped plate member 220 and the third bottom wall 233 of the third U-shaped plate member 230 so that the second bottom wall 223 and the third bottom wall 233 face each other. In this comparative example, for example, two of the first side clearance flow passages 610 are provided.

As illustrated in Figs. 1 and 2, each of the second cathode gas flow passage 500b and the third cathode gas flow passage 500c of cathode gas flow passage 500 is defined by an outer surface of the second U-shaped plate member 220 and an inner surface of the first U-shaped plate member 210. The cathode gas flow passage 500 includes a second side clearance flow passage 510 (the side clearance flow passage) and a second bottom clearance flow passage 520 (the bottom clearance flow passage) that is in communication with the second side clearance flow passage 510. The second side clearance flow passage 510 corresponds to the third cathode gas flow passage 500c, and is formed or defined by arranging one of the first side walls 212 of the first U-shaped plate member 210 and one of the second side walls 222 of the second U-shaped plate member 220 so that the first side wall 212 and the second side wall 222 face each other. The second bottom clearance flow passage 520 corresponds to the second cathode gas flow passage 500b, and is defined by arranging the first bottom wall 213 of the first U-shaped plate member 210 and the second bottom wall 223 of the second U-shaped plate member 220 so that the first bottom wall 213 and the second bottom wall 223 face each other. In this comparative example, for example, two of the second side clearance flow passages 510 are provided.

According to the first comparative example, at least two of the first U-shaped plate member 210, the second U-shaped plate member 220 and the third U-shaped plate member 230 may be provided with plural protrusions 290 each serving as a spacer and protruding toward a counterpart U-shaped plate member (the counterpart U-shaped plate member refers to the U-shaped plate member that faces the U-shaped plate member at which the protrusions 290 are provided) so that the clearance flow passage is formed. More specifically, as illustrated in Fig. 3, each of the first U-shaped plate member 210 and the second U-shaped plate member 220 is provided with the plural protrusions 290 each serving as the spacer and protruding toward the counterpart U-shaped plate member. The protrusions 290, each of which includes a dimple configuration, are formed integrally with the respective first U-shaped plate member 210 and second U-shaped plate member 220. The plural protrusions 290 may be distributed sparsely in order to decrease variations in a clearance width of the clearance flow passage. Each of the protrusions 290 may be formed as a separate member and may be fixed to the U-shaped plate member by means of, for example, welding or an inorganic adhesive agent.

At least one of the first U-shaped plate member 210, the second U-shaped plate member 220 and the third U-shaped plate member 230 may be provided with a rib for reinforcement. The rib may be formed to extend in the lengthwise direction of the housing 200 (in the direction of the arrow L). Even in a case where the U-shaped plate member includes a thinner wall for a purpose of weight reduction, the first U-shaped plate member 210, the second U-shaped plate member 220 and the third U-shaped plate member 230 may be strengthened, which contributes to strengthening of the housing 200. The rib and the protrusions may be provided so as not to affect flows of the gases.

Further, as illustrated in Figs. 1 and 2, the first closing member 201 may be provided with a first rib 206 for reinforcement. The first rib 206 may be formed to extend in the lengthwise direction (the direction of the arrow L illustrated in Fig. 3). The second closing member 202 may be provided with a second rib for reinforcement. Each of the protrusions 290, the first rib 206 and the second rib may be easily formed by means of press molding, and enhancement of strength is expected due to work hardening.

According to the first comparative example, the first U-shaped plate member 210, which corresponds to an outer layer of the above-described housing 200, is formed in the U-shape when viewed in the cross section and includes the first upper surface opening portion 211. The second U-shaped plate member 220, which corresponds to an intermediate layer of the housing 200, is formed in the U-shape when viewed in the cross section and includes the second upper surface opening portion 221. The third U-shaped plate member 230, which corresponds to an inner layer of the housing 200, is formed in the U-shape when viewed in the cross section and includes the third upper surface opening portion 231. Thus, when the assembly parts including, for example, the stack 400 and the reformer 300, are assembled to an inside of the first U-shaped plate member 210, the second U-shaped plate member 220 and the third U-shaped plate member 230, the aforementioned assembly parts may be assembled from the upper surface opening portions located at the upper side of the housing 200 or from the end openings located at respective lateral sides of the housing 200. In this case, it is prevented that the assembly parts including, for example, the stack 400 and the reformer 300, interfere with a ceiling wall of the first U-shaped plate member 210, a ceiling wall of the second U-shaped plate member 220 and a ceiling wall of the third U-shaped plate member 230. A reason for this is that none of the first U-shaped plate member 210, the second U-shaped plate member 220 and the third U-shaped plate member 230 includes the ceiling wall. Accordingly, an assembly performance of assembling, for example, the stack 400 and the reformer 300 to the inside of the U-shaped plate members is enhanced.

At the power generation chamber 203, the heat generally ascends. Thus, at the power generation chamber 203 of the housing 200, temperature is likely to be higher at the upper portion than at a lower portion. Specifically, because the combusting portions 700 and the reformers 300 are arranged above the respective stacks 400 that are arranged at the power generation chamber 203 of the housing 200, the upper portion of the power generation chamber 203 of the housing 200 is likely to be higher in temperature than the lower portion of the power generation chamber 203.

Thus, when viewed in the cross-sectional view (Fig. 1) in the height direction of the fuel cell apparatus (the direction of the arrow H), in a case where the first closing member 201 and the second closing member 202 thermally expand and undergo extensional deformation or elongation deformation in a width direction (a transverse direction, the direction of the arrow X1) of the housing 200, the deformation volume of the first closing member 201 is transmitted to the first intersection portions 214 via the respective first side walls 212, and the deformation volume of the second closing member 202 is transmitted to the second intersection portions 224 via the respective second side walls 222. Even in such a case, the first intersection portions 214 are flexible, and therefore are likely to allow the first side walls 212 to be deformed relative to the first bottom wall 213 in the direction of the arrow K1 so as to follow the deformation of the first closing member 201. The second intersection portions 224 are flexible, and therefore are likely to allow the second side walls 222 to be deformed relative to the second bottom wall 223 in the direction of the arrow K2 so as to follow the deformation of the second closing member 202. The same applies to the third intersection portions 234 of the third U-shaped plate member 230.

Thus, in a case of the thermal expansion due to the power generating operation and in a case of the thermal contraction due to the cooling after the operation stop, although the first closing member 201 and/or the second closing member 202 thermally expand and contract in the direction of the arrow X1, stress loading working at the first welded portion 201 h for fixing the first closing member 201 and at the second welded portion 202h for fixing the second closing member 202 is reduced. Accordingly, a possibility is reduced that the thermal expansion and contraction may affect the first welded portion 201 h and the second welded portion 202h. Consequently, durability and longevity of the housing 200 are enhanced. The same applies to a case where the closing members are attached to the housing 200 by means of fixture including, for example, bolts and nuts, instead of the welding at the first welded portion 201 h and the second welded portion 202h. The stress loading working at the fixture is reduced, and thus durability and longevity of the fixture are enhanced.

As illustrated in Fig. 1, in a case where the first closing member 201 thermally expands and then elongates in the transverse direction for a length ΔW, a phenomenon may occur in which the first side walls 212 connected to the first closing member 201 at the respective first welded portions 201h are lifted upwardly (in the direction of the arrow W5) under the influence of the length ΔW. In this case, the above-described phenomenon (that is, a lifting phenomenon) is coped with because the first intersection portions 214 of the first U-shaped plate member 210 include flexibility (bendability). Thus, a possibility is reduced that the stress loading is applied to the first welded portion 201 h. The same applies to the second U-shaped plate member 220, and a possibility is reduced that the stress loading is applied to the second welded portion 202h.

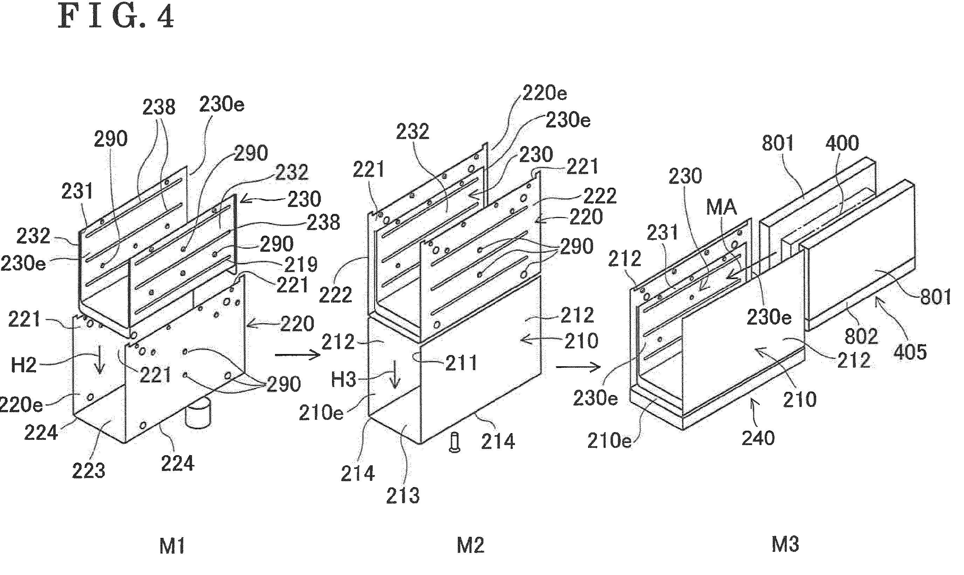

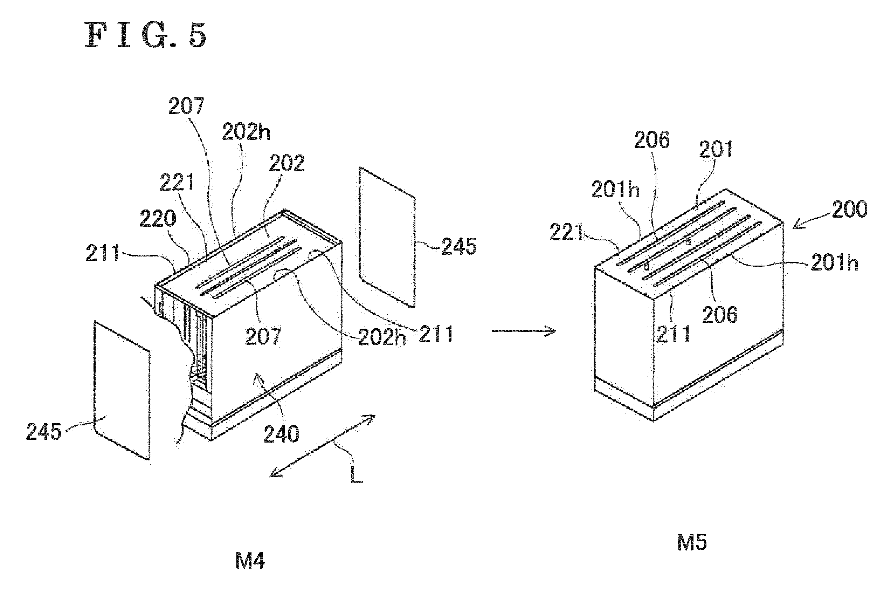

Figs. 4 and 5 illustrate a second comparative example disclosed here. The second comparative example basically includes the same configuration, function and effect as those of the first comparative example. Figs. 4 and 5 illustrate an example form of assembling the housing 200. As illustrated in Fig. 4, a rib 238 for reinforcement is provided at the third U-shaped plate member 230, which includes the U-shaped cross section and corresponds to the inner layer, so as to extend in the lengthwise direction thereof (the direction of the arrow L). Further, the plural protrusions 290, each of which includes the dimple configuration, for defining the clearance flow passage are provided at the third U-shaped plate member 230. A height of each of the ribs for reinforcement is set to be lower than a height of each of the dimples, thereby preventing the flow passage from being blocked. The heights of the rib and the dimple refer to the heights in the thickness direction of the U-shaped members. The third U-shaped plate member 230 is strengthened by the rib 238.

As illustrated as a process M1 in Fig. 4, the third U-shaped plate member 230 including the U-shaped cross section is inserted in a direction of an arrow H2 from the second upper surface opening portion 221 so as to be arranged inside the second U-shaped plate member 220 (the intermediate layer). Next, as illustrated as a process M2 in Fig. 4, the second U-shaped plate member 220, in which the third U-shaped plate member 230 is arranged, is inserted in a direction of an arrow H3 via the first upper surface opening portion 211 so as to be arranged inside the first U-shaped plate member 210 (the outer layer). Thus, a U-shaped assembly 240 is formed.

As illustrated as a process M3 in Fig. 4, a stack assembly 405 is formed by preassembling the side thermal insulating layer 801, the bottom thermal insulating layer 802 and the stacks 400 to one another. The stack assembly 405 is inserted inside the U-shaped assembly 240 from a lateral side (that is, in a direction of an arrow MA), that is, from the third end opening 230e of the third U-shaped plate member 230. Depending on circumstances, the stack assembly 405 may be moved from above to below, that is, the stack assembly 405 may be inserted into the U-shaped assembly 240 from the third upper surface opening portion 231 of the third U-shaped plate member 230 because the U-shaped assembly 240 includes no ceiling closing an upper portion thereof. After that, the reformers 300 and other assembly parts are assembled to the U-shaped assembly 240. After that, as illustrated as a process M4 in Fig. 5, the second closing member 202 provided with a second rib 207 is assembled to the U-shaped assembly 240 at the second welded portion 202h so that the second upper surface opening portion 221 of the second U-shaped plate member 220 is closed with the second closing member 202. Further, two end closing members 245 are assembled to respective end portions of the U-shaped assembly 240 in the lengthwise direction thereof (the direction of the arrow L) by means of welding. After that, as illustrated as a process M5 in Fig. 5, the first closing member 201 provided with the first rib 206 is assembled to the first upper surface opening portion 211 of the first U-shaped plate member 210 by means of welding so that the first upper surface opening portion 211 of the first U-shaped plate member 210 is closed. Thus, the housing 200 is assembled. The form of assembling the housing 200, however, is not limited thereto.

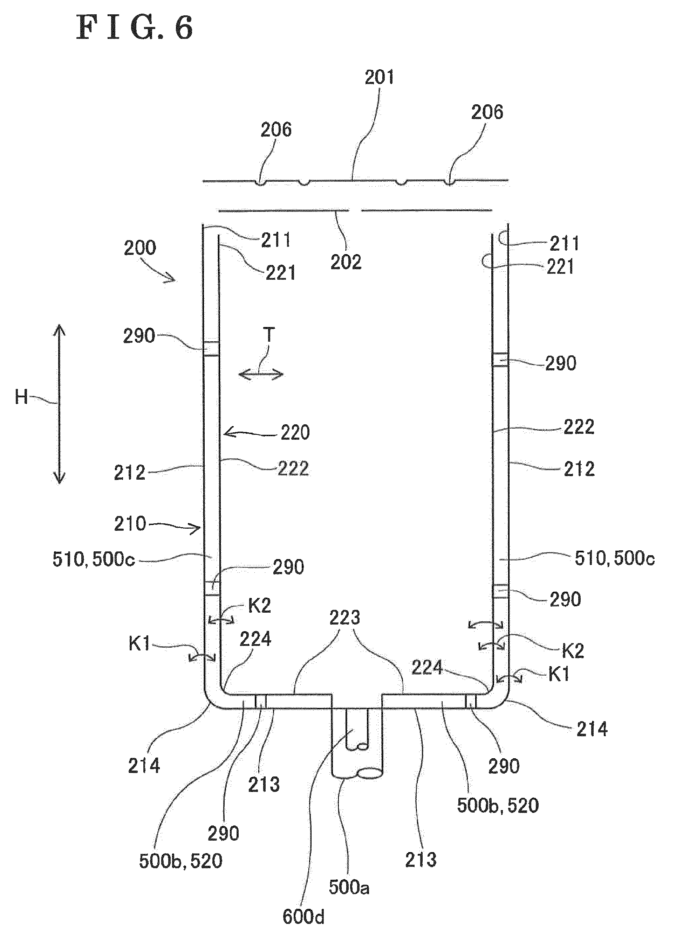

Fig. 6 illustrates a third comparative example disclosed here. The third comparative example basically includes the same configuration, function and effect as those of the first and second comparative examples. The third comparative example will be explained, focusing on configurations that are different from the first and/or second comparative example. Fig. 6 is a cross-sectional view of the housing 200, which is cut in the height direction thereof (the direction of the arrow H) and illustrates a transverse cross section of the housing 200. As illustrated in Fig. 6, the main framework of the housing 200 is formed by assembling the first U-shaped plate member 210 and the second U-shaped plate member 220 to each other. In the third comparative example, the third U-shaped plate member 230 is not provided.

As illustrated in Fig. 6, the first U-shaped plate member 210 arranged at an outer side is made of metal and includes the U-shaped cross section. The first U-shaped plate member 210 includes the first upper surface opening portion 211, the two first side walls 212 facing each other, the first bottom wall 213 connecting the lower portions of the respective first side walls 212 to each other and the first intersection portion 214. In this comparative example, the first intersection portion 214 is provided at, for example, two positions. Each of the first intersection portions 214 is the portion at which the first bottom wall 213 and the first side wall 212 intersect with each other. Each of the first intersection portions 214 is flexible, and therefore allows the first side wall 212 to be easily displaced in the direction of the arrow K1 relative to the first bottom wall 213.

The second U-shaped plate member 220 is made of metal and includes the U-shaped cross section. The second U-shaped plate member 220 includes the second upper surface opening portion 221, the two second side walls 222 facing each other, the second bottom wall 223 connecting the lower portions of the respective second side walls 222 to each other and the second intersection portion 224. In this comparative example, the second intersection portion 224 is provided at, for example, two positions. Each of the second intersection portions 224 is flexible, and therefore allows the second side wall 222 to be easily displaced in the direction of the arrow K2 relative to the second bottom wall 223. Each of the second intersection portions 224 is the portion at which the second bottom wall 223 and the second side wall 222 intersect with each other.

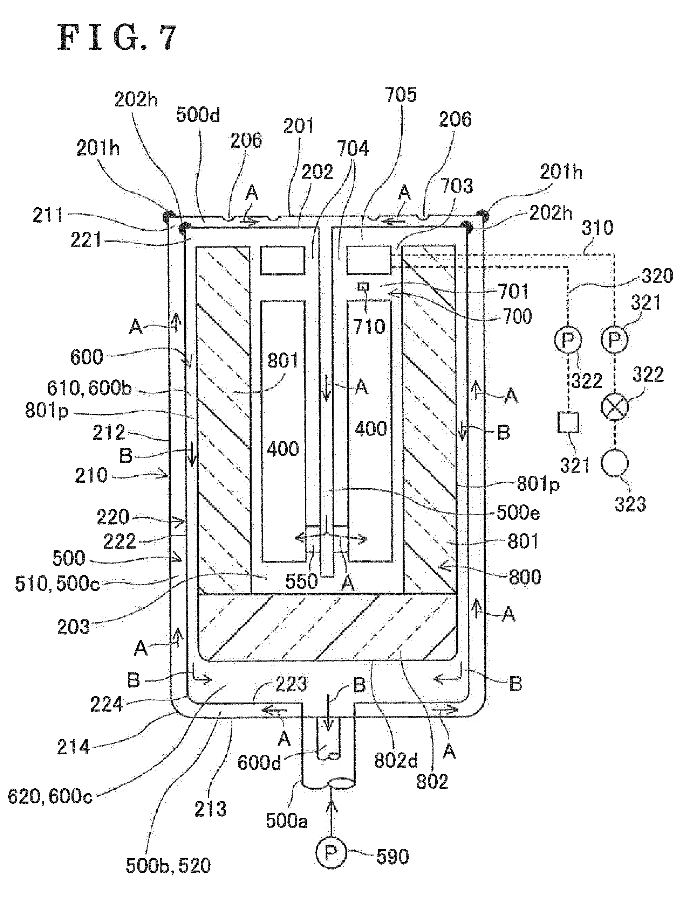

As illustrated in Figs. 6 and 7, the first U-shaped plate member 210 and the second U-shaped plate member 220 are layered with each other in the thickness direction thereof (the direction of the arrow T) in a manner that the first upper surface opening portion 211 and the second upper surface opening portion 221 are positioned at the upper side. Thus, the housing 200 is formed by assembling the first U-shaped plate member 210 and the second U-shaped plate member 220 to each other in the above-described manner. The first upper surface opening portion 211 of the first U-shaped plate member 210 is closed with the first closing member 201 at the first welded portion 201 h. In this comparative example, the first welded portion 201h is provided at, for example, two positions. The second upper surface opening portion 221 of the second U-shaped plate member 220 is closed with the second closing member 202 at the second welded portion 202h. In this comparative example, the second welded portion 202h is provided at, for example, two positions. The first closing member 201 and the second closing member 202 define the fourth cathode gas flow passage 500d.

As illustrated in Fig. 7, each of the second exhaust gas flow passage 600b and the third exhaust gas flow passage 600c of the exhaust gas flow passage 600 is defined by an outer surface of the side thermal insulating layer 801 and the inner surface of the second U-shaped plate member 220. Here, the exhaust gas flow passage 600 includes the first side clearance flow passage 610 and the first bottom clearance flow passage 620 that is in communication with the first side clearance flow passage 610. The first side clearance flow passage 610 corresponds to the second exhaust gas flow passage 600b, and is formed or defined by arranging one of the second side walls 222 of the second U-shaped plate member 220 and an outer surface 801 p of the side thermal insulating layer 801 so that the second side wall 222 and the outer surface 801 p face each other. The first bottom clearance flow passage 620 corresponds to the third exhaust gas flow passage 600c, and is defined by arranging the second bottom wall 223 of the second U-shaped plate member 220 and a lower surface 802d of the bottom thermal insulating layer 802 so as to face each other so that the second bottom wall 223 and the lower surface 802d face each other.

As illustrated in Fig. 7, each of the second cathode gas flow passage 500b and the third cathode gas flow passage 500c of cathode gas flow passage 500 is defined by the outer surface of the second U-shaped plate member 220 and the inner surface of the first U-shaped plate member 210. The cathode gas flow passage 500 includes the second side clearance flow passage 510 and the second bottom clearance flow passage 520 that is in communication with the second side clearance flow passage 510. As illustrated in Fig. 7, the second side clearance flow passage 510 corresponds to the third cathode gas flow passage 500c, and is defined by arranging one of the first side walls 212 of the first U-shaped plate member 210 and one of the second side walls 222 of the second U-shaped plate member 220 so that the first side wall 212 and the second side wall 222 face each other. The second bottom clearance flow passage 520 corresponds to the second cathode gas flow passage 500b, and is defined by arranging the first bottom wall 213 of the first U-shaped plate member 210 and the second bottom wall 223 of the second U-shaped plate member 220 so as to face each other.

In a similar manner to the first comparative example, according to the third comparative example, at least one of the first U-shaped plate member 210 and the second U-shaped plate member 220 may be provided with the plural protrusions 290 (refer to Fig. 6) each serving as the spacer and protruding toward the counterpart U-shaped plate member (the counterpart U-shaped plate member refers to the U-shaped plate member that faces the U-shaped plate member at which the protrusions 290 are provided). The plural protrusions 290 may be provided so as to be distributed sparsely. At least one of the first U-shaped plate member 210 and the second U-shaped plate member 220 may be provided with the rib for reinforcement. The rib contributes to strengthening of the housing 200 even in a case where the U-shaped plate member includes the thinner wall for a purpose of the weight reduction. Further, as illustrated in Fig. 7, the first closing member 201 may be provided with the first rib 206 for reinforcement. The second closing member 202 may be provided with the second rib for reinforcement. Each of the protrusions 290, the first rib 206 and the second rib may be easily formed by means of press molding, and the enhancement of the strength is expected due to work hardening.

According to the third comparative example, the first U-shaped plate member 210, which corresponds to the outer layer of the above-described housing 200, is formed in the U-shape and includes the first upper surface opening portion 211. The second U-shaped plate member 220, which corresponds to the inner layer of the housing 200, is formed in the U-shape and includes the second upper surface opening portion 221. Thus, when the assembly parts including, for example, the stack 400 and the reformer 300, are assembled to the inside of the first U-shaped plate member 210 and the second U-shaped plate member 220, it is prevented that the aforementioned assembly parts interfere with the ceiling wall of the first U-shaped plate member 210 and the ceiling wall of the second U-shaped plate member 220. The reason for this is that neither the first U-shaped plate member 210 nor the second U-shaped plate member 220 includes the ceiling wall. Accordingly, the assembly parts including, for example, the stack 400 and the reformer 300, may be inserted inside the U-shaped plate members from above or from a lateral side. Consequently, the assembly performance of assembling, for example, the stack 400 and the reformer 300 to the inside of the U-shaped plate members is enhanced. According to the third comparative example, the reformers are arranged inside the housing, however, the reformers may be arranged outside the housing. Further, hydrogen may be supplied directly to the stack 400 instead of the anode gas that is supplied to the stack 400 via the reformers.

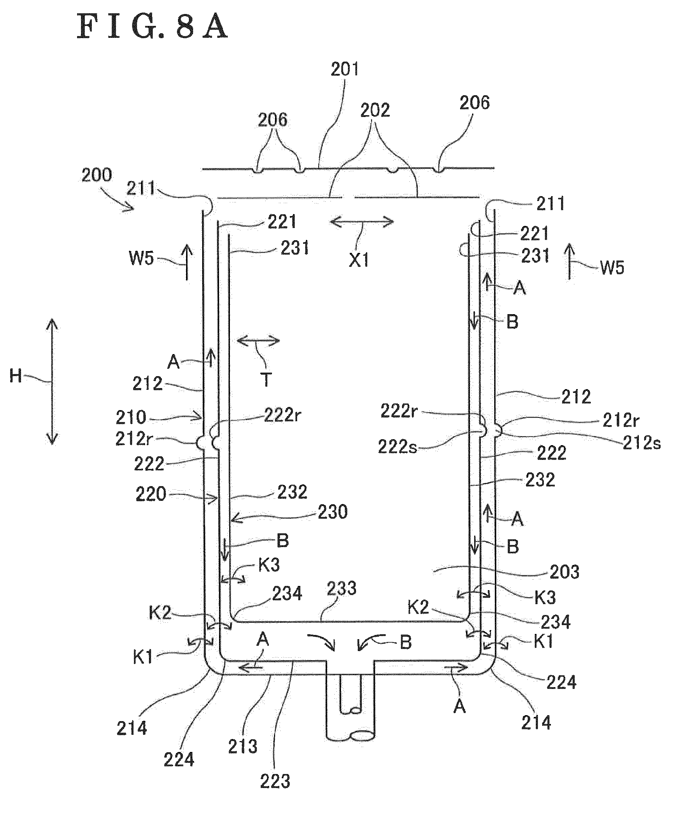

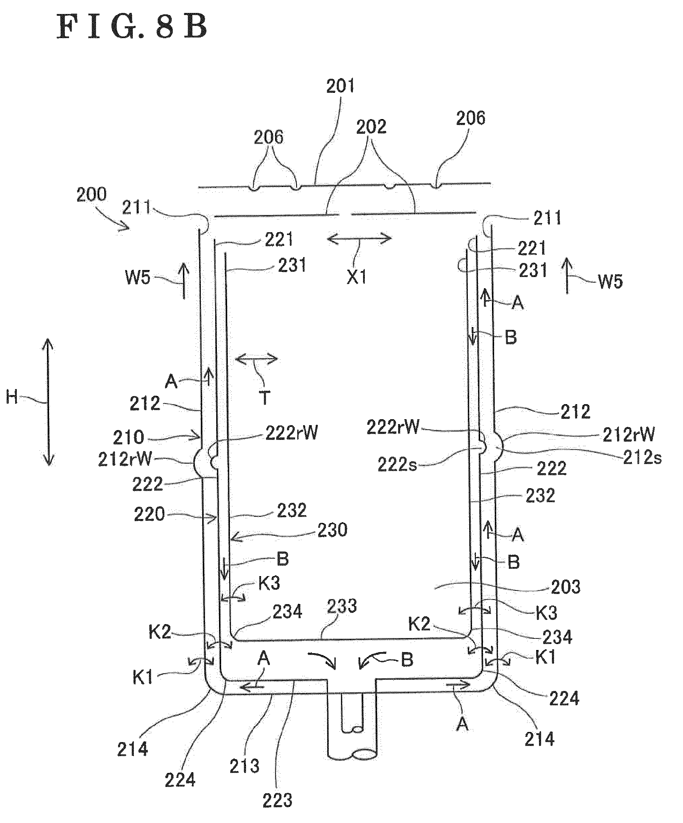

Figs. 8A and 8B illustrate an embodiment according to the present invention disclosed here. The embodiment basically includes the same configuration, function and effect as those of the first to third comparative examples. The embodiment will be explained, focusing on configurations that are different from the first, second and/or third comparative example. The first side wall 212 of the first U-shaped plate member 210 is provided with a first ribbed-and-raised portion 212r serving as the rib. The first ribbed-and-raised portion 212r is formed by means of press molding and includes a first recess 212s. The second side wall 222 of the second U-shaped plate member 220 is provided with a second ribbed-and-raised portion 222r serving as the rib. The second ribbed-and-raised portion 222r is formed by means of press molding and includes a second recess 222s. Each of the first ribbed-and-raised portion 212r and the second ribbed-and-raised portion 222r is formed to extend continuously in the lengthwise direction of the first U-shaped plate member 210 and the second U-shaped plate member 220 (the direction of the arrow L). Even in a case where the first closing member 201 and the second closing member 202 elongate in the direction of the arrow X1 due to the thermal expansion, and thus in a case where the deformation occurs by which the first side wall 212 and the second side wall 222 are lifted in the direction of the arrow W5 under the influence of the elongation, the first ribbed-and-raised portion 212r and the second ribbed-and-raised portion 222r have advantages of assuring the elongation of the first side wall 212 and the second side wall 222, that is, each of the first ribbed-and-raised portion 212r and the second ribbed-and-raised portion 222r includes allowance that may compensate for the elongation of the first side wall 212 and the second side wall 222, respectively. Thus, the stress loading working at the first welded portion 201h and the second welded portion 202h (refer to Fig. 1) is further reduced, and thus the first welded portion 201h and the second welded portion 202h (refer to Fig. 1) are advantageously protected. As illustrated in Fig. 8A, the first and second ribbed-and-raised portions 212r and 222r are positioned at a same height in the direction of the arrow H and formed so as to rise in the same direction as each other. As illustrated in Fig. 8B, because a first rib width 212rW is designed to be larger than a second rib width 222rW, a cross section of the flow passage is assured at a portion where the rib is formed. Accordingly, variations or fluctuations in a width of the flow passage clearance in the thickness direction of the U-shaped member are restricted, and thus fluctuations in flow rate of the cathode gas and flow rate of the exhaust gas are restricted. The first ribbed-and-raised portion 212r and the second ribbed-and-raised portion 222r (the first rib width 212rW and the second rib width 222rW) may be positioned at different heights from each other and may be formed in different directions from each other.

This disclosure is not limited to the embodiments described above and illustrated in the drawings, and may be appropriately changed or modified without departing from the scope of the present invention as defined by the appended claims. The cell stack of the fuel cell is not limited to the solid oxide fuel cell and may be a solid polymer electrolyte fuel cell, a phosphoric acid fuel cell or a molten carbonate fuel cell in some instances. The fuel to be supplied to the reformer is not limited to a particular fuel, and may be the fuel gas including, for example, city gas, propane gas, biogas, liquefied petroleum gas (LPG), compressed natural gas (CNG), and may be a liquid-phase fuel including, for example, methanol, ethanol, kerosene. Entire portion of one of the cathode gas flow passage and the exhaust gas flow passage may be formed or defined by the first U-shaped plate member and the second U-shaped plate member. Entire portion of the other one of the cathode gas flow passage and the exhaust gas flow passage may be formed or defined by the second U-shaped plate member and the third U-shaped plate member.

A fuel cell apparatus includes a housing (200) including a power generation chamber (203) and a closing member (201, 202), a stack (400), a cathode gas flow passage (500), and an exhaust gas flow passage (600), the housing includes a first U-shaped plate member (210) which includes a first upper surface opening portion (211) opening upwardly, two first side walls (212) and a first bottom wall (213), the housing includes a second U-shaped plate member (220) which includes a second upper surface opening portion (221) opening upwardly, two second side walls (222) and a second bottom wall (223), the housing is formed by layering the first and second U-shaped plate members with each other while a clearance being provided therebetween, and one of the cathode gas flow passage and the exhaust gas flow passage includes a side clearance flow passage (510, 610) and a bottom clearance flow passage (520, 620).

## Claims

1. A fuel cell apparatus, comprising:
a housing (200) including a power generation chamber (203) and a closing member (201, 202) closing an upper portion of the power generation chamber (203);
a stack (400) provided in the power generation chamber (203) and supplied with an anode gas and a cathode gas to generate electric power;
a cathode gas flow passage (500) provided at the housing (200) and allowing the cathode gas to be supplied to the stack (400);
an exhaust gas flow passage (600) provided at the housing (200) and allowing an exhaust gas generated at the power generation chamber (203) to be exhausted to an outside of the power generation chamber (203);
the housing (200) including a first U-shaped plate member (210) which is formed in a U-shape and includes a first upper surface opening portion (211) opening upwardly in a height direction of the housing (200), two first side walls (212) facing each other, a first bottom wall (213) connecting a lower portion of each of the two first side walls (212) to each other;
the housing (200) including a second U-shaped plate member (220) which is formed in a U-shape and includes a second upper surface opening portion (221) opening upwardly in the height direction, two second side walls (222) facing each other, a second bottom wall (223) connecting a lower portion of each of the two second side walls (222) to each other;
the housing (200) being formed by layering the first U-shaped plate member (210) and the second U-shaped plate member (220) with each other while a clearance being provided between the first U-shaped plate member (210) and the second U-shaped plate member (220) in a thickness direction thereof in a manner that the first upper surface opening portion (211) and the second upper surface opening portion (221) are positioned at an upper side in the height direction; and
at least part of at least one of the cathode gas flow passage (500) and the exhaust gas flow passage (600) including a side clearance flow passage (510, 610) formed by one of the two first side walls (212) and one of the two second side walls (222) which faces the one of the two first side walls (212) in a thickness direction thereof, and a bottom clearance flow passage (520, 620) formed by the first bottom wall (213) and the second bottom wall (223) which face each other, the bottom clearance flow passage (520, 620) being in fluid communication with the side clearance flow passage (510, 610),
**characterized in that**
each of the first side walls (212) and the second side walls (222) is provided with a ribbed-and-raised portion (212r, 222r) including a recess (212s, 222s), the ribbed-and-raised portion (212r, 222r) including the recess (212s, 222s) being formed to be extended continuously in a lengthwise direction of the first U-shaped plate member (210) and the second U-shaped plate member (220).

2. The fuel cell apparatus according to claim 1, wherein
the first U-shaped plate member (210), the second U-shaped plate member (220) and a thermal insulating layer (800) are arranged in this order from the outside towards the power generation chamber (203) in the thickness direction,
at least part of one of the cathode gas flow passage (500) and the exhaust gas flow passage (600) is formed by the thermal insulating layer (800) and the second U-shaped plate member (220), and
at least part of the other one of the cathode gas flow passage (500) and the exhaust gas flow passage (600) is formed by the first U-shaped plate member (210) and the second U-shaped plate member (220).

3. The fuel cell apparatus according to either claim 1 or 2, wherein
the housing (200) includes a third U-shaped plate member (230) formed in a U-shape and including a third upper surface opening portion (231) opening upwardly, two third side walls (232) facing each other, a third bottom wall (233) connecting a lower portion of each of the two third side walls (232) to each other,
the first U-shaped plate member (210), the second U-shaped plate member (220) and the third U-shaped plate member (230) are arranged from the outside towards the power generation chamber (203) in the thickness direction,
the housing (200) is formed by layering the first U-shaped plate member (210), the second U-shaped plate member (220) and the third U-shaped plate member (230) with one another in the thickness direction thereof in a manner that the first upper surface opening portion (211), the second upper surface opening portion (221) and the third upper surface opening portion (231) are positioned at the upper side in the height direction of the housing (200),
at least part of one of the cathode gas flow passage (500) and the exhaust gas flow passage (600) includes a first side clearance flow passage (610) formed by one of the two first side walls (212) and one of the two second side walls (222) which faces the one of the two first side walls (212), and a first bottom clearance flow passage (620) formed by the first bottom wall (213) and the second bottom wall (223) which face each other, the first bottom clearance flow passage (620) is in fluid communication with the first side clearance flow passage (610), and
at least part of the other one of the cathode gas flow passage (500) and the exhaust gas flow passage (600) includes a second side clearance flow passage (510) formed by one of the two second side walls (222) and one of the two third side walls (232) which faces the one of the two second side walls (222), and a second bottom clearance flow passage (520) formed by the second bottom wall (223) and the third bottom wall (233) which face each other, the second bottom clearance flow passage (520) is in fluid communication with the second side clearance flow passage (510).

4. The fuel cell apparatus according to claim 3, wherein
the first U-shaped plate member (210), the second U-shaped plate member (220) and the third U-shaped plate member (230) are arranged in this order from the outside towards the power generation chamber (203) in the thickness direction,
at least part of one of the cathode gas flow passage (500) and the exhaust gas flow passage (600) is formed by the first U-shaped plate member (210) and the second U-shaped plate member (220), and
at least part of the other one of the cathode gas flow passage (500) and the exhaust gas flow passage (600) is formed by the second U-shaped plate member (220) and the third U-shaped plate member (230).

5. The fuel cell apparatus according to any one of claims 1 through 4, further comprising:
a combusting portion (700) provided above the stack (400) and combusting a combustible gas, the combustible gas including an anode off-gas and/or a fuel gas which are discharged from an upper surface of the stack (400).

6. The fuel cell apparatus according to any one of claims 1 through 5, wherein
at least one of the first U-shaped plate member (210) and the second U-shaped plate member (220) includes a plurality of protrusions (290) that form the side clearance flow passage (510, 610) and the bottom clearance flow passage (520, 620) by protruding toward the other one of the first U-shaped plate member (210) and the second U-shaped plate member (220).

## Patentansprüche

1. Brennstoffzellengerät, das Folgendes aufweist:
ein Gehäuse (200), das eine Stromerzeugungskammer (203) und ein Schließbauteil (201, 202) aufweist, das einen oberen Abschnitt der Stromerzeugungskammer (203) schließt;
einen Stack (400), der in der Stromerzeugungskammer (203) vorgesehen ist und mit einem Anodengas und einem Kathodengas versorgt wird, um einen elektrischen Strom zu erzeugen;
einen Kathodengasströmungsdurchgang (500), der an dem Gehäuse (200) vorgesehen ist und es ermöglicht, dass das Kathodengas zu dem Stack (400) zugeführt wird;
einen Auslassgasströmungsdurchgang (600), der an dem Gehäuse (200) vorgesehen ist und es zulässt, dass ein Auslassgas, das an der Stromerzeugungskammer (203) erzeugt wird, zu einer Außenseite der Stromerzeugungskammer (203) ausgelassen wird; wobei
das Gehäuse (200) ein erstes U-förmiges Plattenbauteil (210) aufweist, das in einer U-Form ausgebildet ist und einen ersten oberen Flächenöffnungsabschnitt (211), der nach oben in einer Höhenrichtung des Gehäuses (200) offen ist, zwei erste Seitenwände (212), die zueinander zugewandt sind, und eine erste Bodenwand (213) aufweist, die einen unteren Abschnitt von jeder der zwei ersten Seitenwände (212) miteinander verbindet;
das Gehäuse (200) ein zweites U-förmiges Plattenbauteil (220) aufweist, das in einer U-Form ausgebildet ist und einen zweiten oberen Flächenöffnungsabschnitt (221), der nach oben in der Höhenrichtung offen ist, zwei zweite Seitenwände (222), die zueinander zugewandt sind, und eine zweite Bodenwand (223) aufweist, die einen unteren Abschnitt von jeder der zwei zweiten Seitenwände (222) miteinander verbindet;
das Gehäuse (200) durch Übereinanderschichten des ersten U-förmigen Plattenbauteils (210) und des zweiten U-förmigen Plattenbauteils (220) ausgebildet ist, während ein Zwischenraum zwischen dem ersten U-förmigen Plattenbauteil (210) und dem zweiten U-förmigen Plattenbauteil (220) in deren Dickenrichtung in einer Weise vorgesehen ist, dass der erste obere Flächenöffnungsabschnitt (211) und der zweite obere Flächenöffnungsabschnitt (221) an einer oberen Seite in der Höhenrichtung positioniert sind; und
zumindest ein Teil von zumindest einem von dem Kathodengasströmungsdurchgang (500) und dem Auslassgasströmungsdurchgang (600) einen Seitenzwischenraumströmungsdurchgang (510, 610), der durch eine der zwei ersten Seitenwände (212) und eine der zwei zweiten Seitenwände (222) ausgebildet ist, die zu der einen der zwei ersten Seitenwände (212) in ihrer Dickenrichtung zugewandt ist, und einen Bodenzwischenraumströmungsdurchgang (520, 620) aufweist, der durch die erste Bodenwand (213) und die zweite Bodenwand (223) ausgebildet ist, die zueinander zugewandt sind, wobei der Bodenzwischenraumströmungsdurchgang (520, 620) mit dem Seitenzwischenraumströmungsdurchgang (510, 610) in Fluidverbindung steht,
**dadurch gekennzeichnet, dass**
jede der ersten Seitenwände (212) und der zweiten Seitenwände (222) mit einem gerippten und erhöhten Abschnitt (212r, 222r) vorgesehen ist, der eine Vertiefung (212s, 222s) aufweist, wobei der gerippte und erhöhte Abschnitt (212r, 222r) die Vertiefung (212s, 222s) aufweist, die ausgebildet ist, um sich kontinuierlich in einer Längsrichtung des ersten U-förmigen Plattenbauteils (210) und des zweiten U-förmigen Plattenbauteils (220) zu erstrecken.

2. Brennstoffzellengerät nach Anspruch 1, wobei
das erste U-förmige Plattenbauteil (210), das zweite U-förmige Plattenbauteil (220) und eine Wärmeisolierungsschicht (800) in dieser Reihenfolge von der Außenseite zu der Stromerzeugungskammer (203) in der Dickenrichtung angeordnet sind,
zumindest ein Teil von einem des Kathodengasströmungsdurchgangs (500) und des Auslassgasströmungsdurchgangs (600) durch die Wärmeisolierungsschicht (800) und das zweite U-förmige Plattenbauteil (220) ausgebildet ist, und
zumindest ein Teil von dem anderen des Kathodengasströmungsdurchgangs (500) und des Auslassgasströmungsdurchgangs (600) durch das erste U-förmige Plattenbauteil (210) und das zweite U-förmige Plattenbauteil (220) ausgebildet ist.

3. Brennstoffzellengerät nach entweder Anspruch 1 oder 2, wobei
das Gehäuse (200) ein drittes U-förmiges Plattenbauteil (230) aufweist, das in einer U-Form ausgebildet ist und einen dritten oberen Flächenöffnungsabschnitt (231), der nach oben offen ist, zwei dritte Seitenwände (232), die zueinander zugewandt sind, und eine dritte Bodenwand (233) aufweist, die einen unteren Abschnitt von jeder der zwei dritten Seitenwände (232) miteinander verbindet,
das erste U-förmige Plattenbauteil (210), das zweite U-förmige Plattenbauteil (220) und das dritte U-förmige Plattenbauteil (230) von der Außenseite zu der Stromerzeugungskammer (203) in der Dickenrichtung angeordnet sind,
das Gehäuse (200) durch Übereinanderschichten des ersten U-förmigen Plattenbauteils (210), des zweiten U-förmigen Plattenbauteils (220) und des dritten U-förmigen Plattenbauteils (230) in deren Dickenrichtung in einer Weise ausgebildet ist, dass der erste obere Flächenöffnungsabschnitt (211), der zweite obere Flächenöffnungsabschnitt (221) und der dritte obere Flächenöffnungsabschnitt (231) an der oberen Seite in der Höhenrichtung des Gehäuses (200) positioniert sind,
zumindest ein Teil von einem des Kathodengasströmungsdurchgangs (500) und des Auslassgasströmungsdurchgangs (600) einen ersten Seitenzwischenraumströmungsdurchgang (610), der durch eine der zwei ersten Seitenwände (212) und eine der zwei zweiten Seitenwände (222) ausgebildet ist, die zu der einen der zwei ersten Seitenwände (212) zugewandt ist, und einen ersten Bodenzwischenraumströmungsdurchgang (620) aufweist, der durch die erste Bodenwand (213) und die zweite Bodenwand (223) ausgebildet ist, die zueinander zugewandt sind, wobei der erste Bodenzwischenraumströmungsdurchgang (620) mit dem ersten Seitenzwischenraumströmungsdurchgang (610) in Fluidverbindung steht, und
zumindest ein Teil des anderen von dem Kathodengasströmungsdurchgang (500) und dem Auslassgasströmungsdurchgang (600) einen zweiten Seitenzwischenraumströmungsdurchgang (510), der durch eine der zwei zweiten Seitenwände (222) und eine der zwei dritten Seitenwände (232) ausgebildet ist, die zu der einen der zwei zweiten Seitenwände (222) zugewandt ist, und einen zweiten Bodenzwischenraumströmungsdurchgang (520) aufweist, der durch die zweite Bodenwand (223) und die dritte Bodenwand (233) ausgebildet ist, die zueinander zugewandt sind, wobei der zweite Bodenzwischenraumströmungsdurchgang (520) mit dem zweiten Seitenzwischenraumströmungsdurchgang (510) in Fluidverbindung steht.

4. Brennstoffzellengerät nach Anspruch 3, wobei
das erste U-förmige Plattenbauteil (210), das zweite U-förmige Plattenbauteil (220) und das dritte U-förmige Plattenbauteil (230) in dieser Reihenfolge von der Außenseite zu der Stromerzeugungskammer (203) in der Dickenrichtung angeordnet sind,
zumindest ein Teil von einem des Kathodengasströmungsdurchgangs (500) und des Auslassgasströmungsdurchgangs (600) durch das erste U-förmige Plattenbauteil (210) und das zweite U-förmige Plattenbauteil (220) ausgebildet ist, und
zumindest ein Teil von dem anderen des Kathodengasströmungsdurchgangs (500) und des Auslassgasströmungsdurchgangs (600) durch das zweite U-förmige Plattenbauteil (220) und das dritte U-förmige Plattenbauteil (230) ausgebildet ist.

5. Brennstoffzellengerät nach einem der Ansprüche 1 bis 4, das des Weiteren Folgendes aufweist:
einen Brennabschnitt (700), der oberhalb des Stacks (400) vorgesehen ist und in dem ein brennbares Gas verbrennt, wobei das brennbare Gas ein Anodenabgas und/oder ein Brennstoffgas umfasst, die/das von einer oberen Fläche des Stacks (400) abgegeben werden/wird.

6. Brennstoffzellengerät nach einem der Ansprüche 1 bis 5, wobei
zumindest eines von dem ersten U-förmigen Plattenbauteil (210) und dem zweiten U-förmigen Plattenbauteil (220) eine Vielzahl von Vorsprüngen (290) aufweist, die den Seitenzwischenraumströmungsdurchgang (510, 610) und den Bodenzwischenraumströmungsdurchgang (520, 620) ausbilden, indem sie zu dem anderen von dem ersten U-förmigen Plattenbauteil (210) und dem zweiten U-förmigen Plattenbauteil (220) hin vorstehen.

## Revendications

1. Appareil de pile à combustible comprenant :
un boîtier (200) comprenant une chambre de génération de puissance (203) et un élément de fermeture (201, 202) fermant une partie supérieure de la chambre de génération de puissance (203) ;
un empilement (400) prévu dans la chambre de génération de puissance (203) et alimenté avec un gaz anodique et un gaz cathodique pour générer de l'énergie électrique ;
un passage d'écoulement de gaz cathodique (500) prévu au niveau du boîtier (200) et permettant d'amener le gaz cathodique à l'empilement (400) ;
un passage d'écoulement de gaz d'échappement (600) prévu au niveau du boîtier (200) et permettant au gaz d'échappement généré au niveau de la chambre de génération de puissance (203) d'être évacué vers un extérieur de la chambre de génération de puissance (203) ;
le boîtier (200) comprend un premier élément de plaque en forme de U (210) qui est formé en forme de U et comprend une première partie d'ouverture de surface supérieure (211) s'ouvrant vers le haut dans le sens de la hauteur du boîtier (200), deux premières parois latérales (212) se faisant face, une première paroi inférieure (213) raccordant une partie inférieure de chacune des deux premières parois latérales (212) entre elles ;
le boîtier (200) comprenant un deuxième élément de plaque en forme de U (220) qui est formé en forme de U et comprend une deuxième partie d'ouverture de surface supérieure (221) s'ouvrant vers le haut dans le sens de la hauteur, deux secondes parois latérales (222) se faisant face, une deuxième paroi inférieure (223) raccordant une partie inférieure de chacune des deux secondes parois latérales (220) entre elles ;
le boîtier (200) étant formé en déposant en couche le premier élément de plaque en forme de U (210) et le deuxième élément de plaque en forme de U (220) l'un par rapport à l'autre alors qu'un jeu est prévu entre le premier élément de plaque en forme de U (210) et le deuxième élément de plaque en forme
de U (220) dans le sens de leur épaisseur de sorte que la première partie d'ouverture de surface supérieure (211) et la deuxième partie d'ouverture de surface supérieure (221) sont positionnées au niveau d'un côté supérieur dans le sens de la hauteur ; et
au moins une partie d'au moins l'un parmi le passage d'écoulement de gaz cathodique (500) et le passage d'écoulement de gaz d'échappement (600) comprenant un passage d'écoulement de jeu latéral (510, 610) formé par l'une des deux premières parois latérales (212) et l'une des deux secondes parois latérales (222) qui fait face à l'une des deux premières parois latérales (212) dans le sens de leur épaisseur, et un passage d'écoulement de jeu inférieur (520, 620) formé dans la première paroi inférieure (213) et la deuxième paroi inférieure (223) qui se font face, le passage d'écoulement de jeu inférieur (520, 620) étant en communication de fluide avec le passage d'écoulement de jeu latéral (510, 610),
**caractérisé en ce que**
chacune des premières parois latérales (212) et des secondes parois latérales (222) est prévue avec une partie nervurée et relevée (212r, 222r) comprenant un évidement (212s, 222s), la partie nervurée et relevée (212r, 222r) comprenant l'évidement (212s, 222s) qui est formé pour être étendu de manière continue dans le sens de la longueur du premier élément de plaque en forme de U (210) et du deuxième élément de plaque en forme de U (220).

2. Appareil de pile à combustible selon la revendication 1, dans lequel
le premier élément de plaque en forme de U (210), le deuxième élément de plaque en forme de U (220) et une couche d'isolation thermique (800) sont agencés dans cet ordre à partir de l'extérieur vers la chambre de génération de puissance (203) dans le sens de l'épaisseur,
au moins une partie de l'un parmi le passage d'écoulement de gaz cathodique (500) et le passage d'écoulement de gaz d'échappement (600) est formée par la couche d'isolation thermique (800) et le deuxième élément de plaque en forme de U (220), et
au moins une partie de l'autre parmi le passage d'écoulement de gaz cathodique (500) et le passage d'écoulement de gaz d'échappement (600) est formée par le premier élément de plaque en forme de U (210) et le deuxième élément de plaque en forme de U (220).

3. Appareil de pile à combustible selon la revendication 1 ou 2, dans lequel
le boîtier (200) comprend un troisième élément de plaque en forme de U (230) formé en forme de U et comprenant une troisième partie d'ouverture de surface supérieure (231) s'ouvrant vers le haut, deux troisièmes parois latérales (232) se faisant face, une troisième paroi inférieure (233) raccordant une partie inférieure de chacune des deux troisièmes parois latérales (232) entre elles,
le premier élément de plaque en forme de U (210), le deuxième élément de plaque en forme de U (220) et le troisième élément de plaque en forme de U (230) sont agencés à partir de l'extérieur vers la chambre de génération de puissance (203) dans le sens de l'épaisseur,
le boîtier (200) est formé en déposant en couche le premier élément de plaque en forme de U (210), le deuxième élément de plaque en forme de U (220) et le troisième élément de plaque en forme de U (230) les uns par rapport aux autres dans le sens de leur épaisseur de sorte que la première partie d'ouverture de surface supérieure (211), la deuxième partie d'ouverture de surface supérieure (221) et la troisième partie d'ouverture de surface supérieure (231) sont positionnées au niveau du côté supérieur de le sens de la hauteur du boîtier (200),
au moins une partie de l'un parmi le passage d'écoulement de gaz cathodique (500) et le passage d'écoulement de gaz d'échappement (600) comprend un premier passage d'écoulement de jeu latéral (610) formé par l'une des deux premières parois latérales (212) et l'une des deux deuxièmes parois latérales (222) qui fait face à l'une des deux premières parois latérales (212) et un premier passage d'écoulement de jeu inférieur (620) formé par la première paroi inférieure (213) et la deuxième paroi inférieure (223) qui se font face, le premier passage d'écoulement de jeu inférieur (620) est en communication de fluide avec le premier passage d'écoulement de jeu latéral (610), et
au moins une partie de l'autre parmi le passage d'écoulement de gaz cathodique (500) et le passage d'écoulement de gaz d'échappement (600) comprend un second passage d'écoulement de jeu latéral (510) formé par l'une des deux deuxièmes parois latérales (222) et l'une des deux troisièmes parois latérales (232) qui fait face à l'une des deux deuxièmes parois latérales (222), et un second passage d'écoulement de jeu inférieur (520) formé par la deuxième paroi inférieure (223) et la troisième paroi inférieure (233) qui se font face, le second passage d'écoulement de jeu inférieur (520) est en communication de fluide avec le second passage d'écoulement de jeu latéral (510).

4. Appareil de pile à combustible selon la revendication 3, dans lequel
le premier élément de plaque en forme de U (210), le deuxième élément de plaque en forme de U (220) et le troisième élément de plaque en forme de U (230) sont agencés dans cet ordre depuis l'extérieur vers la chambre de génération de puissance (203) dans le sens l'épaisseur,
au moins une partie de l'un parmi le passage d'écoulement de gaz cathodique (500) et le passage d'écoulement de gaz d'échappement (600) est formée par le premier élément de plaque en forme de U (210) et le deuxième élément de plaque en forme de U (220), et
au moins une partie de l'autre parmi le passage d'écoulement de gaz cathodique (500) et le passage d'écoulement de gaz d'échappement (600) est formée par le deuxième élément de plaque en forme de U (220) et le troisième élément de plaque en forme de U (230).

5. Appareil de pile à combustible selon l'une quelconque des revendications 1 à 4, comprenant en outre :
une partie de combustion (700) prévue au-dessus de l'empilement (400) et faisant brûler un gaz combustible, le gaz combustible comprenant un gaz de dégagement d'anode et/ou un gaz de combustible qui sont déchargés à partir d'une surface supérieure de l'empilement (400).

6. Appareil de pile à combustible selon l'une quelconque des revendications 1 à 5, dans lequel
au moins l'un parmi le premier élément de plaque en forme de U (210) et le deuxième élément de plaque en forme de U (220) comprend une pluralité de saillies (290) qui forment le passage d'écoulement de jeu latéral (510, 610) et le passage d'écoulement de jeu inférieur (520, 620) en faisant saillie vers l'autre parmi le premier élément de plaque en forme de U (210) et le deuxième élément de plaque en forme de U (220).
